# EUROPÄISCHE PATENTANMELDUNG

(11) **EP 0 545 398 A1**
(43) Veröffentlichungstag der Anmeldung: **09.06.1993**
(21) Anmeldenummer: 92120603.3
(22) Anmeldetag: 03.12.1992
(51) Int. Cl.: B65G 39/20, B65G 17/40, B65G 47/26, B65G 17/24, B65G 17/08, B65G 19/02, B65G 21/02

(54) **Vorrichtung zum Transport von Gegenständen**

(30) Priorität: 05.12.1991 DE 4140206
(71) Anmelder: Johann A. Krause Maschinenfabrik GmbH & Co., D-28777 Bremen (DE)
(72) Erfinder: Schreier, Ulrich, W-2820 Bremen 70 (DE); Kuckelsberg, Karl-Wilhelm, W-2822 Schwanewede 1 (DE)
(74) Vertreter: Möller, Friedrich, Dipl.-Ing.

(57) **Zusammenfassung**

2.1. Bekannte Vorrichtungen der hier angesprochenen Art verfügen über sogenannte Gliederketten aus einer Vielzahl miteinander verbundener Kettenteile (15). Diese umlaufend angetriebenen Gliederketten (Transportkette 13) gleiten auf einer Führungsbahn (14) entlang. Die Gegenstände bzw. Transportpaletten (11) liegen direkt auf einem Basisteil (17) jedes Kettenteils (15), wodurch im Falle eines momentanen Stillstands des Gegenstands oder der Transportpalette (11) die Gliederkette (Transportkette 13) hierunter entlangrutscht.

2.2. Die erfindungsgemäße Vorrichtung verfügt über eine Transportkette (13), die mit Rollen (29) und/oder Staurollen (31) versehen ist. Die Transportkette (13) rollt daher auf der Führungsbahn (14) entlang. Die Staurollen (31) tragen dazu bei, daß die Transportkette (13) beim momentanen Stillstand des Gegenstands oder der Transportpalette (11) unter denselben hinwegrollt. Durch die erfindungsgemäße Transportkette (13) wird somit eine Gleitreibung zwischen der Führungsbahn (14) und/oder dem momentan stillstehenden Gegenstand bzw. der Transportpalette (11) vermieden.

3. Die erfindungsgemäße Vorrichtung eignet sich besonders zum Transport leichter Gegenstände (Werkstücke), an denen Montagevorgänge ausgeführt werden sollen.

## Beschreibung

Die Erfindung betrifft eine Vorrichtung zum Transport von Gegenständen gemäß den Oberbegriffen der Ansprüche 1, 6, 11 bzw. 16.

Die hier angesprochenen Vorrichtungen werden vorwiegend zum Transport leichter Gegenstände, insbesondere Werkstücke, eingesetzt. Die Gegenstände ruhen direkt oder unter Zuhilfenahme von Transportpaletten auf einer Förderkette, die längs einer Führungsbahn bewegt wird. Die Führungsbahn dient zur Führung der Förderkette auf einer von der Führungsbahn vorgegebenen Förderstrecke.

Bei bekannten Vorrichtungen der vorstehend genannten Art gleitet die Förderkette aus einer Mehrzahl zusammengekuppelter Kettenteile an der stationären (stillstehenden) Führungsbahn entlang. Das ist der Grund, weswegen derartige Vorrichtungen nur zum Transport relativ leichter Gegenstände Verwendung finden. Gleichwohl bringt auch der Transport leichter Gegenstände infolge des Entlanggleitens der Förderkette an der Führungsbahn Nachteile mit sich. Diese sind besonders hohe Laufgeräusche, relativ hohe Antriebskräfte und ein nicht unerheblicher Verschleiß.

Bekannte Vorrichtungen dieser Art werden auch dort eingesetzt, wo Staustrecken vorhanden sind. Einige Gegenstände kommen dann auf der Förderbahn bei weiterhin angetriebener Förderkette zum Stillstand. Die Förderkette gleitet dabei unter den zu transportierenden Gegenständen entlang. Auch das führt zu den obengenannten Nachteilen. Darüber hinaus können Beschädigungen der zu transportierenden Gegenstände in der Staustrecke nicht ausgeschlossen werden.

Des weiteren sind die bekannten Vorrichtungen dieser Art nur zum Transport bestimmter Gegenstände, insbesondere diese tragende Transportpaletten, geeignet. Sollen zum Beispiel Transportpaletten verwendet werden, die auf der Förderkette gehalten oder geführt werden müssen, sind die Führungsbahnen mit Führungen für die jeweiligen Transportpaletten zu versehen. Unter diesem Gesichtspunkt leiden die bekannten Vorrichtungen unter einer mangelnden Flexibilität. Sie müssen in Anlehnung an die konkret zu fördernden Gegenstände, insbesondere Transportpaletten, konzipiert werden.

Schließlich haben die bekannten Vorrichtungen vor allem dann, wenn sie in Montagestrecken eingesetzt werden, den Nachteil, daß die transportierten Gegenstände, an denen Montagevorgänge auszuführen sind, nur begrenzt zugänglich sind. Eine Zugänglichkeit der Gegenstände von unten ist infolge der unter den Gegenständen angeordneten Förderkette bei den bekannten Vorrichtungen dieser Art nicht möglich.

Hiervon ausgehend liegt der Erfindung die Aufgabe zugrunde, eine Vorrichtung zum Transport von Gegenständen zu schaffen, die den geforderten Bedürfnissen gerecht wird, insbesondere einen schonenden, geräuscharmen und leichten Transport der Gegenstände zuverlässig und mit geringem Verschleiß gewährleistet.

Zur Lösung dieser Aufgabe weist die Vorrichtung die Merkmale des Anspruchs 1 auf. Durch die den Kettenteilen zugeordneten Wälzkörper rollt die Förderkette auf der Förderbahn. Die bei bekannten Vorrichtungen dieser Art übliche Gleitreibung zwischen der Förderkette und der Förderbahn wird somit vermieden. Das führt zu geringeren Laufgeräuschen und zur weitestgehenden Vermeidung eines Verschleißes. Darüber hinaus kann die Förderkette höher belastet werden, wodurch sich die erfindungsgemäße Vorrichtung im Vergleich zu bekannten Vorrichtungen durch eine höhere Tragfähigkeit auszeichnet.

Bei einer bevorzugten Ausführungsform der Erfindung sind die Wälzkörper im Bereich der üblicherweise gelenkigen Verbindung zwischen jeweils zwei benachbarten Kettenteilen angeordnet. Dadurch wird zweierlei erreicht: Zum einen wird die Förderkette von den Wälzkörpern exakt am Verlauf der Führungsbahn entlanggeführt, während zum anderen mit einer geringstmöglichen Anzahl an Wälzkörpern eine zuverlässige und vollständig rollende Führung der Transportkette gewährleistet ist.

Zur Lösung der eingangs genannten Aufgabe dient weiterhin eine Vorrichtung mit den Merkmalen des Anspruchs 6. Durch die den Kettenteilen zugeordneten Tragrollen zur Abstützung der zu transportierenden Gegenstände wird erreicht, daß in Staustrecken, wenn die zu transportierenden Gegenstände kurzfristig zum Stillstand kommen, die Förderkette rollend unter den (momentan) stillstehenden Gegenständen weiterbewegbar ist. Die bei den bekannten Vorrichtungen dieser Art im Falle des Stillstands der zu transportierenden Gegenstände sich einstellende Gleitreibung zwischen den Gegenständen und der Förderkette wird so vermieden. Dadurch, daß die Staurollen weiterhin antreibbar sind, können die zu transportierenden Gegenstände auch relativ zur Förderkette bewegt werden. Sie erhalten dadurch eine Transportgeschwindigkeit gegenüber der stillstehenden Förderbahn, die sich aus der Geschwindigkeit der Förderkette und der Umfangsgeschwindigkeit der Staurollen zusammensetzt. Je nach Antriebsrichtung der Staurollen kann die Transportgeschwindigkeit der Gegenstände gegenüber der Führungsbahn größer oder kleiner als die Geschwindigkeit der Förderkette sein.

Vorzugsweise ist jedem Kettenteil eine Tragrolle zugeordnet. Die Last der sich mindestens auf zwei Tragrollen abstützenden Gegenstände wird auf mehrere Kettenteile verteilt. Es ist aber auch denkbar, jedem Kettenteil mehrere Tragrollen zuzuordnen.

Gemäß einer Weiterbildung der Vorrichtung ist vorgesehen, jede Tragrolle um eine quer zur Förderrichtung verlaufende Drehachse frei drehbar im jeweiligen Kettenteil zu lagern, wobei mindestens ein oberer Abschnitt jeder Tragrolle gegenüber der Ebene des jeweiligen Kettenteils nach oben vorsteht zur Verhinderung eines Kontakts zwischen der oberen Ebene des Kettenteils und dem zu transportierenden Gegenstand. Durch die freie Drehbarkeit der Tragrollen wird erreicht, daß sich bei stillstehenden Gegenständen die weiterhin angetriebene Förderkette leicht weiterbewegen läßt, indem sich die Tragrollen unterhalb des (momentan stillstehenden) Gegenstands abwälzen.

Der Antrieb der Staurollen kann erfolgen durch Trommelmotore, Reibräder oder dergleichen. Bei einer bevorzugten Ausführungsform der Erfindung werden die Staurollen dadurch angetrieben, daß sie sich durch eine reibschlüssige Anlage an der Förderbahn oder anderen stillstehenden Organen der Vorrichtung während ihrer Fortbewegung durch die Förderkette abwälzen. Ein gezielter Antrieb der Staurollen an bestimmten Abschnitten der Förderbahn kann dadurch erreicht werden, daß nur an diesen die Staurollen in Kontakt mit der Förderbahn oder dergleichen gebracht werden und sich hierauf abrollen. In anderen Bereichen der Förderbahn, in denen kein Antrieb der Staurollen erfolgen soll, werden durch eine entsprechende Führung der Förderkette oder Ausbildung der Förderbahn die Staurollen von der Förderbahn oder dergleichen abgehoben, so daß sie während des Weitertransports der Förderkette frei liegen und nicht mehr durch ein Abwälzen an der Förderbahn oder dergleichen drehend angetrieben werden.

Eine weitere Vorrichtung zur Lösung der der Erfindung zugrundeliegenden Aufgabe weist die Merkmale des Anspruchs 11 auf. Demnach ist die Führungsbahn gebildet aus einem Tragprofil mit einer nutartigen Vertiefung und einer in der Vertiefung angeordneten Führungsschiene zur Aufnahme mindestens eines Teils der Förderkette. Durch unterschiedlich ausgebildete Führungsschienen läßt sich die Förderkette in unterschiedliche Relativlagen zum Tragprofil bringen. Damit ist die Position der Förderkette in der Führungsschiene veränderbar zur Anpassung an unterschiedliche Gegenstände oder unterschiedliche Paletten zur Aufnahme derselben. Die Vorrichtung läßt sich auf diese Weise leicht umrüsten, indem ein Austausch der Führungsschienen erfolgt. Die Transportkette und vor allem das Tragprofil, das üblicherweise ortsfest an der Förderstrecke befestigt ist, können auf diese Weise unverändert bleiben.

Eine weitere Vorrichtung zur Lösung der der Erfindung zugrundeliegenden Aufgabe weist die Merkmale des Anspruchs 16 auf. Durch die zwei Förderbahnen, von denen erfindungsgemäß nur eine einer Transportkette zum Antrieb einer Transportpalette zugeordnet ist, lassen sich relativ großvolumige Gegenstände transportieren, wobei dadurch, daß die zweite Förderbahn keine angetriebene Förderkette aufweist, die Vorrichtung über einen relativ einfachen Aufbau verfügt. Ein weiterer Vorteil dieser Vorrichtung besteht darin, daß zwischen den beiden parallel zueinander verlaufenden Förderbahnen, deren Abstand von der Transportpalette überbrückt wird, Platz geschaffen wird, der einen Zugang der Palette bzw. der darauf zu transportierenden Gegenstände von unten her ermöglicht. Damit eignet sich diese Vorrichtung besonders zum Transport von Gegenständen, die von allen Seiten, und zwar insbesondere der Unterseite, her zugänglich sein müssen, beispielsweise zu Montagezwecken.

Nach einer Weiterbildung dieser Vorrichtung ist vorgesehen, daß die Transportpalette an mindestens einer Führungsbahn geführt ist. Vorzugsweise erfolgt eine Führung der Transportpalette im Bereich derjenigen Führungsbahn, die mit der Förderkette versehen ist. Dazu kann die Unterseite der Transportpalette mit einem Vorsprung versehen sein, der in eine entsprechende Vertiefung oder Nut der (ersten) Führungsbahn eingreift und auf der dieser zugeordneten Transportkette aufliegt zur reibschlüssigen Mitnahme der Transportpalette durch die Transportkette. Der Vorsprung ist bei einer bevorzugten Ausführungsform der Erfindung um eine senkrechte Achse drehbar und gegebenenfalls mit einer um dieselbe (senkrechte) Achse drehbaren Rolle versehen. Alternativ ist es auch möglich, die (zweite) Führungsbahn, auf der sich Laufrollen an der der Transportkette gegenüberliegenden Seite der Transportpalette befinden, mit Führungsorganen für die Transportpalette zu versehen. Zweckmäßigerweise sind diese von einer Schiene gebildet, in der die Laufrollen entlanggleiten.

Die Ansprüche 1, 6, 11 und/oder 16 beanspruchen für sich (selbständig oder in Kombination mit einem oder mehreren der anderen Ansprüche) erfindungsgemäße Ausbildungen der Vorrichtung.

Bevorzugte Ausführungsbeispiele der erfindungsgemäßen Vorrichtung werden nachfolgend anhand der Zeichnung näher erläutert. In dieser zeigen:
- Fig. 1: einen Teil einer Förderkette in einer Draufsicht,
- Fig. 2: eine Seitenansicht eines Teils der Förderkette einer geraden Förderstrecke,
- Fig. 3: einen vergrößerten Schnitt III-III gemäß der Fig. 1 durch ein Kettenteil der Förderkette,
- Fig. 4: einen vergrößerten Schnitt IV-IV gemäß der Fig. 1 durch zwei Kettenteile der Förderkette,
- Fig. 5: einen vertikalen Querschnitt durch die Vorrichtung mit einer Transportpalette und einem darauf angeordneten Werkstück,
- Fig. 6: einen Querschnitt gemäß der Fig. 4 durch die Vorrichtung im Bereich einer Staustrecke,
- Fig. 7: einen Querschnitt analog zur Fig. 4 durch eine andere Ausführungsform der Vorrichtung,
- Fig. 8: einen Querschnitt analog zur Fig. 6 durch ein weiteres Ausführungsbeispiel der Vorrichtung, und
- Fig. 9: einen Querschnitt durch eine erneut abgewandelte Ausführungsform der Vorrichtung.

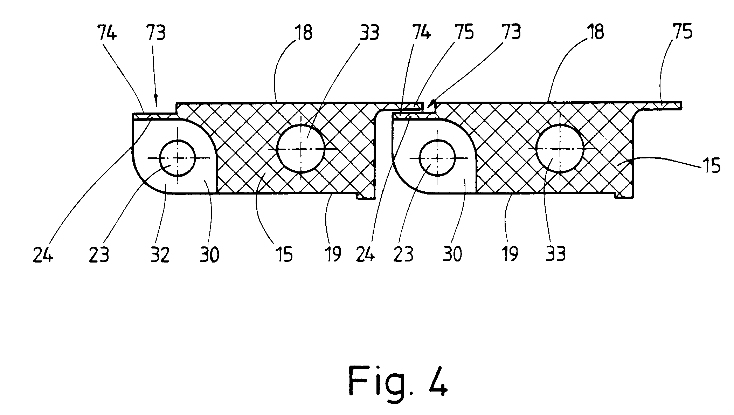

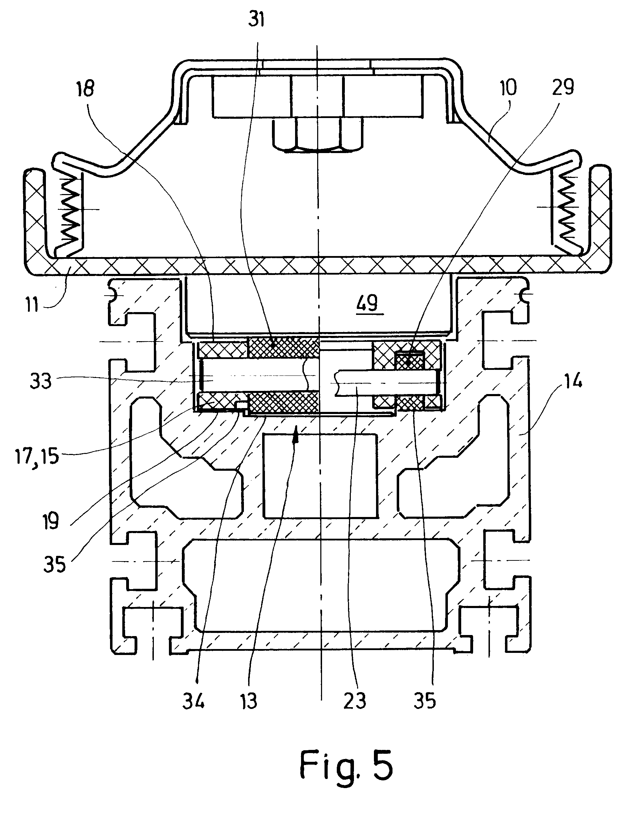

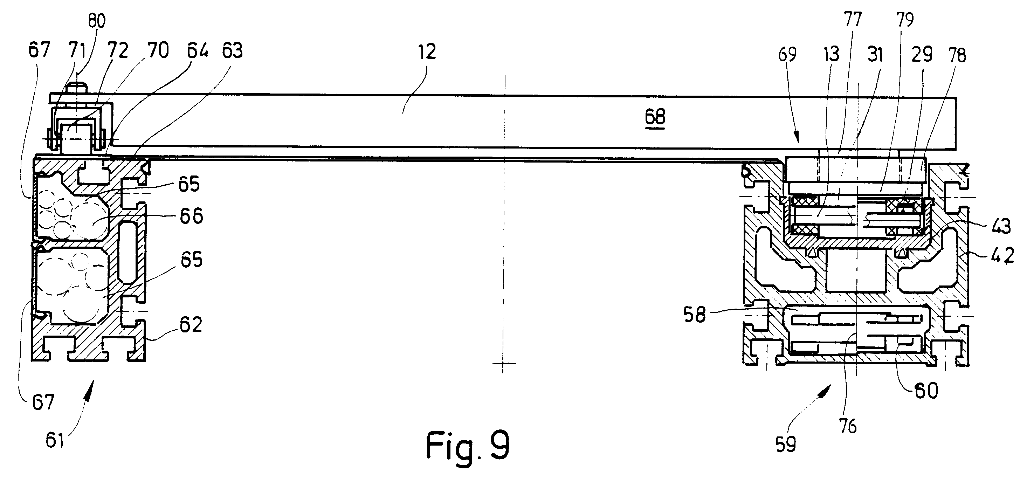

Bei den hier gezeigten Vorrichtungen handelt es sich um sogenannte Gliederkettenförderer zum Transport relativ leichter Gegenstände. Beispielsweise werden solche Förderer eingesetzt zum Transport von Werkstücken wie einer in der Fig. 4 dargestellten Keilriemenscheibe 10. Die Werkstücke können entweder unmittelbar oder unter Zuhilfenahme einer Transportpalette 11 (Fig. 5) oder 12 (Fig. 9) von der Vorrichtung entlang einer Montagestraße oder dergleichen transportiert werden.

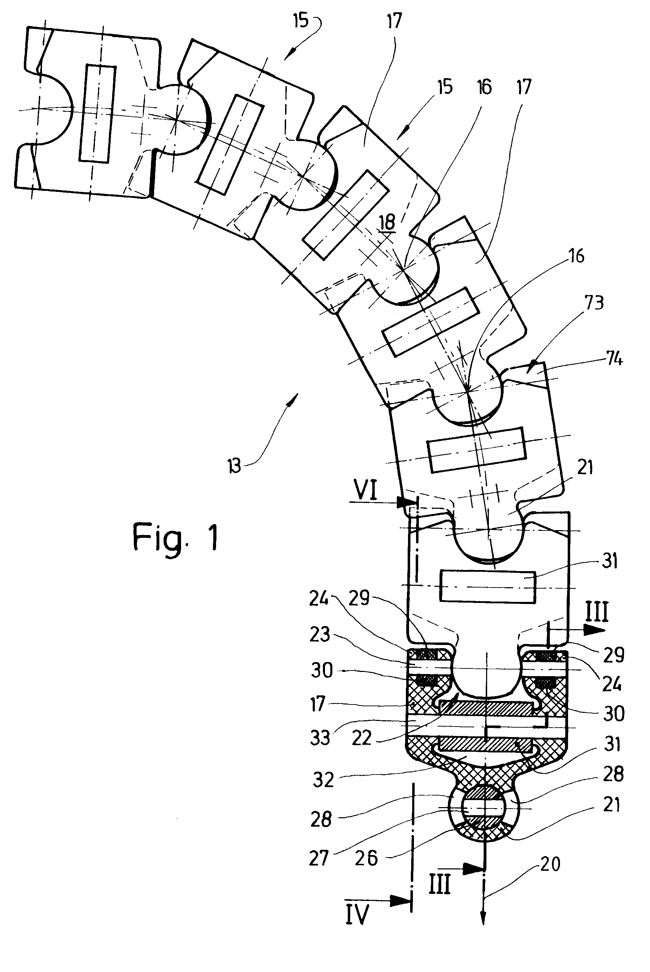

Die Vorrichtungen der Fig. 1 bis 8 verfügen über eine vorzugsweise endlose und umlaufend angetriebene Transportkette 13, die in einer Führungsbahn läuft. Die Führungsbahn ist stationär, also stillstehend, der Montagestraße oder dergleichen zugeordnet. Durch den Verlauf der aus geraden und bogenförmigen Abschnitten zusammengesetzten Führungsbahn wird die Förderstrecke unter Anpassung an die (räumlichen) Gegebenheiten gebildet. Der Verlauf der Förderstrecke ist nicht auf eine Ebene beschränkt; er kann sich vielmehr räumlich (dreidimensional) erstrecken.

Die Transportkette 13 setzt sich aus mehreren Kettenteilen 15 zusammen (Fig. 1 bis 4). Die an sich gleich ausgebildeten Kettenteile 15 sind miteinander verbunden. Diese Verbindung erfolgt hier gelenkig an sich zwischen benachbarten Kettenteilen 15 befindlichen Gelenkpunkten 16.

Jedes Kettenteil 15 verfügt über ein vorzugsweise einstückig aus Kunststoff gebildetes Basisteil 17, das in bezug auf die Förderebene eine ebenflächige Oberseite 18 und Unterseite 19 aufweist. Die Oberseite 18 und die Unterseite 19 verlaufen parallel zueinander. In Draufsicht ist das Basisteil 17 etwa Y-artig ausgebildet. Es verfügt an einer quer zur Förderrichtung 20 verlaufenden Seite über einen Kupplungsvorsprung 21 und an einer gegenüberliegenden - ebenfalls quer zur Förderrichtung 20 verlaufenden - Seite über eine korrespondierend zum Kupplungsvorsprung 21 ausgebildete Kupplungsvertiefung 22. Bei aneinandergekuppelten Kettenteilen 15 greift der Kupplungsvorsprung 21 eines Kettenteils 15 in die Kupplungsvertiefung 22 des benachbarten Kettenteils 15 ein (Fig. 1). Die Verbindung der benachbarten Kettenteile 15 erfolgt im Gelenkpunkt 16 durch eine quer zur Förderrichtung 20 verlaufende Achse 23. Diese erstreckt sich quer durch den Kupplungsvorsprung 21 des einen Kettenteils 15 und durch an gegenüberliegenden Seiten der Kupplungsvertiefung 22 des benachbarten Kettenteils 15 angeordnete Verbindungsklauen 24 (Fig. 1). Die Kupplungsvorsprünge 21 und Kupplungsvertiefungen 22 sind als korrespondierende, ineinandergreifende Kugelabschnitte ausgebildet, wodurch die Transportkette 13 auf- und abwärts und in Kurven geführt werden kann (Fig. 1). Im Kupplungsvorsprung 21 ist eine von der Unterseite 19 des Basisteils 17 ausgehende Sackbohrung 25 angeordnet, in der sich ein zylindrisches oder gegebenenfalls auch kugeliges Gelenkstück 26 befindet. Durch eine quergerichtete Bohrung 27 im Gelenkstück 26 verläuft die Achse 23. An gegenüberliegenden Enden der Bohrung 27 angrenzende Bereiche jedes Kupplungsvorsprungs 21 sind mit Langlöchern 28 (Fig. 1) versehen. Dadurch ist die Achse 23 mit dem Gelenkstück 26 im Kupplungsvorsprung 21 verdrehbar, wodurch die Kurvengängigkeit der Transportkette 13 erreicht wird.

Jedes Kettenteil 15 verfügt an den beiden mit Abstand nebeneinanderliegenden Verbindungsklauen 24 über Vertiefungen 73. Die Vertiefungen 73 gehen aus von den Oberseiten 18 der Kettenteile 15. Eine ebene Deckfläche 74 jeder Vertiefung 73 erstreckt sich mit parallelem Abstand unterhalb der Oberseite 18. Auf gegenüberliegenden Seiten des Kupplungsvorsprungs 21, also an dem von den Vertiefungen 73 weggerichteten Ende des Kettenteils 15, sind dünne, plattenförmige Vorsprünge 75 vorgesehen. Sie sind korrespondierend zu den Vertiefungen ausgebildet. Die Länge der Vorsprünge 75 ist derart gewählt, daß die Vorsprünge 75 des einen Kettenteils 15 sich über einen Teilbereich der Vertiefungen 73 im benachbarten Kettenteil 15 erstrecken (Fig. 1 und 4). Hierdurch wird erreicht, daß bei geradem Verlauf der Transportkette 13 keine Zwischenräume zwischen den benachbarten Kettenteilen 15 entstehen. Die Oberseiten 18 benachbarter Kettenteile 15 gehen somit nahtlos ineinander über. Durch entsprechende Ausbildung der Vorsprünge 75 und der sich nach außen erweiternden Vertiefungen 73 wird erreicht, daß bei einem bogenförmigen Verlauf der Transportkette 13 auf der Bogeninnenseite die Vorsprünge 75 nahezu vollständig die Vertiefungen 73 ausfüllen und somit auch auf der Bogeninnenseite ein nahtloser Übergang auf benachbarte Kettenteile 15 gewährleistet ist (Fig. 1).

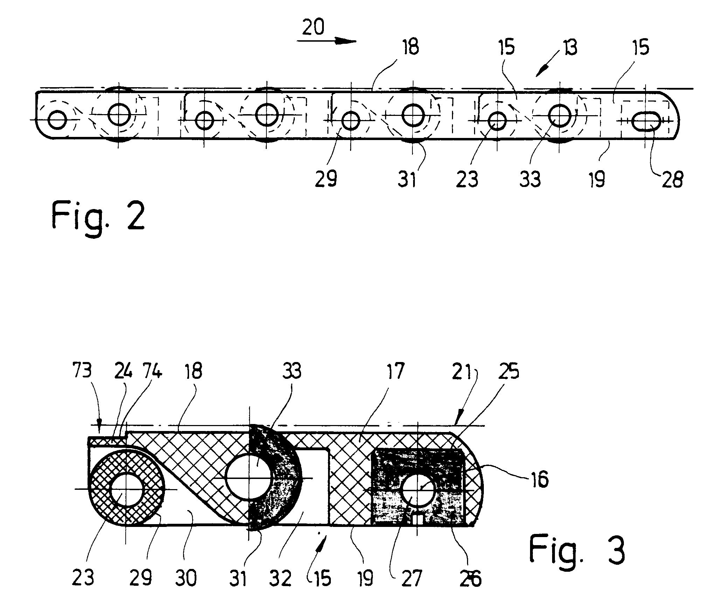

Erfindungsgemäß sind die Kettenteile 15 mit Wälzkörpern versehen. Im gezeigten Ausführungsbeispiel verfügt jedes Kettenteil 15 über zwei Wälzkörper. Die Wälzkörper sind hier als zylindrische Rollen 29 ausgebildet. Jeweils eine Rolle 29 ist mit einer korrespondierenden Freimachung 30 in jeder Verbindungsklaue 24 neben der Kupplungsvertiefung 22 angeordnet. Gehalten sind die Rollen 29 im Basisteil 17 von der zur Verbindung benachbarter Kettenteile 15 dienenden Achse 23. Die Rollen 29 sind frei drehbar auf der Achse 23 gleitgelagert. Der Außendurchmesser der jeweils gleich ausgebildeten Rollen 29 ist derart bemessen, daß jede Rolle 29 bereichsweise gegenüber der Unterseite 19 des Basisteils 17 vorsteht (Fig. 3). Dadurch stützen sich die Kettenteile 15 mit den Rollen 29 auf der Führungsbahn 14 ab. Die Transportkette 13 rollt daher zur Vermeidung einer Gleitreibung auf der Führungsbahn 14 entlang (Fig. 5).

Die Transportkette 13 ist erfindungsgemäß mit Staurollen 31 versehen. Bei der hier gezeigten Transportkette 13 verfügt jedes Kettenteil 15 über eine Staurolle 31 (Fig. 1 bis 3). Die jeweilige Staurolle 31 ist in einer entsprechenden Ausnehmung 32 im Inneren des Basisteils 17 angeordnet. Dazu ist die zylindrische Staurolle 31 auf einer quer zur Förderrichtung 20 verlaufenden Achse 33 frei drehbar gelagert, und zwar gleitgelagert. Die Staurolle 31 ist daher um eine quer zur Förderrichtung 20 verlaufende Drehachse verdrehbar. Der Außendurchmesser der Staurolle 31 ist hier so gewählt, daß entgegengesetzte Bereiche derselben gegenüber der Oberseite 18 und der Unterseite 19 des Basisteils 17 vorstehen (Fig. 3 und 5).

Dadurch, daß die Staurollen 31 gegenüber der Oberseite 18 des Basisteils 17 vorstehen, stützen sich die auf der Vorrichtung zu transportierenden Werkstücke oder die Transportpalette 11 (Fig. 5) nur auf der Staurolle 31 und nicht auf dem Basisteil 17 ab. Dadurch wird erreicht, daß bei momentanem Stillstand des Werkstücks oder der Transportpalette 11 die weiterhin angetriebene Transportkette 13 sich mit den Staurollen 31 unter der Transportpalette 11 oder dem Werkstück hinwegbewegt zur Vermeidung einer Gleitreibung zwischen der Transportkette 13 und den Transportpaletten 11 oder den Werkstücken.

Die Führungsbahn 14 ist derart ausgebildet, daß die gegenüber der Unterseite 19 des Basisteils 17 ebenfalls vorstehende Staurolle 31 sich nicht auf der Führungsbahn 14 abstützt. Dazu ist eine mittige Nut 34 in einer Lauffläche 35 für die Rollen 29 vorgesehen, die korrespondierend zur Breite der Staurolle 31 ausgebildet ist, derart, daß der unten aus dem Basisteil 17 herausragende Bereich der Staurolle 31 mit der Führungsbahn 14 nicht in Kontakt kommt (Fig. 5). Auf diese Weise stehen die Staurollen 31 während des Transports der Werkstücke bzw. Transportpaletten 11 still. Die Werkstücke bzw. Transportpaletten 11 werden dadurch mit der Fördergeschwindigkeit der Transportkette 13 auf den Führungsbahnen 14 entlangtransportiert. Wenn im Falle einer Staustrecke ein oder mehrere Werkstücke oder Transportpaletten 11 zum Stillstand kommen oder mit geringerer Geschwindigkeit im Vergleich zur Transportkette 13 weiterlaufen, wälzen sich die Staurollen 31 unter dem Werkstück bzw. der Transportpalette 11 zur Vermeidung einer Gleitreibung ab.

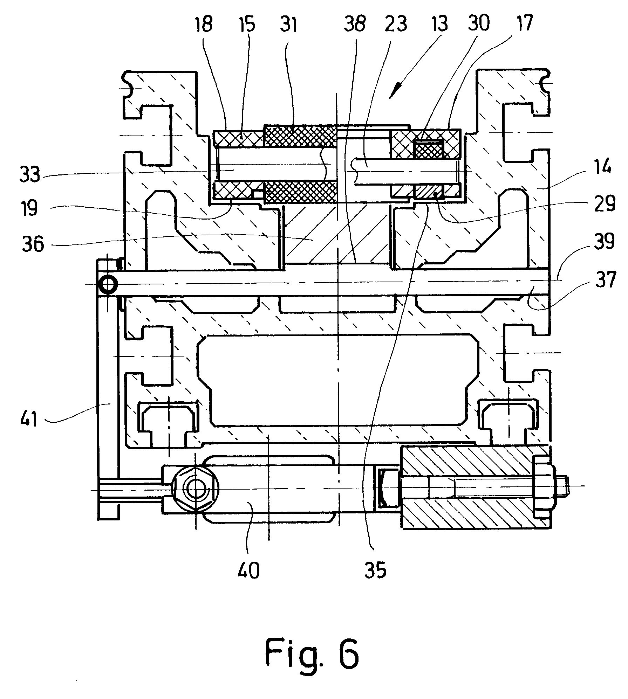

Die Fig. 6 zeigt eine Weiterbildung der Erfindung, wonach die Staurollen 31 indirekt antreibbar sind. Das geschieht dadurch, daß vorzugsweise auf bestimmten Abschnitten der Förderstrecke bzw. Führungsbahn 14 die Staurollen 31 in Kontakt mit der Führungsbahn 14 bringabr sind. Die Staurollen 31 werden dann beim Entlangbewegen der Förderkette 13 an der Führungsbahn 14 durch Reibschluß mit derselben angetrieben, indem sie sich auf der stillstehenden Führungsbahn 14 abwälzen. Dieses kann dadurch geschehen, daß die Nut 34 in der Lauffläche 35 nur auf bestimmten Förderstreckenabschnitten in der Führungsbahn 14 vorhanden ist.

Die Fig. 6 zeigt eine Ausführungsform der Vorrichtung, die einen wahlweisen Antrieb der Staurollen 31 auf bestimmten Abschnitten der Förderstrecke ermöglicht. Dazu ist die Führungsbahn im Bereich der Nut 34 mit einer beweglichen Laufschiene 36 versehen. Diese ist auf einer verdrehbaren Welle 37 mit einem Exzenter 38 gelagert. Durch eine Verdrehung der Welle 37 um ihre horizontale und quer zur Förderrichtung 20 verlaufende Drehachse 39 bewegt der Exzenter 38 die Laufschiene 36 auf oder ab. Verdreht wird im gezeigten Ausführungsbeispiel die Welle 37 durch einen Magneten 40, der einen mit der Drehachse 39 befestigten Schwenkhebel 41 betätigt. Es können aber auch andere Antriebe, zum Beispiel Zahnradtriebe, Stellmotore oder Schwenkzylinder, zum Einsatz kommen.

Wird durch den Exzenter 38 die Laufschiene 36 hochbewegt in die in der Fig. 6 gezeigte Stellung, liegt die jeweilige Staurolle 31 mit ihrem unten aus dem Basisteil 17 des Kettenteils 15 herausragenden Abschnitt auf der in bezug auf die Förderrichtung 20 stillstehend an der Führungsbahn 14 angeordneten Laufschiene 36 an, wobei infolge der Bewegung der Transportkette 13 die Staurolle 31 reibschlüssig angetrieben wird. Dieser Antrieb erfolgt in Förderrichtung 20, so daß die Transportgeschwindigkeit des Werkstücks bzw. der Transportpalette 11 auf den Staurollen 31 doppelt so groß wie die Geschwindigkeit der Transportkette 13 ist. Im Bereich der Anlage der Staurollen 31 an die Laufschiene 36 werden die Werkstücke bzw. Transportpaletten 11 also mit doppelter Fördergeschwindigkeit weiterbewegt.

Der Exzenter 38 ist derart bemessen, daß dieser die Laufschiene 36 so weit anhebt, daß die Rollen 29 des Kettenteils 15 von der Lauffläche 35 der Führungsbahn 14 abgehoben sind. Die Transportkette 13 mit den Werkstücken bzw. den Transportpaletten 11 ruht daher ausschließlich auf der Laufschiene 36 (Fig. 6), wodurch eine ausreichend hohe Reibkraft zwischen der Laufschiene 36 und der jeweiligen Staurolle 31 zur Schaffung einer ausreichenden Antriebskraft derselben gewährleistet ist.

Durch ein andersartiges Bewegen des Exzenters 38 erfolgt ein Absenken der Laufschiene 36 derart, daß der Kontakt zwischen der Laufschiene 36 und der jeweiligen Staurolle 31 aufgehoben wird. Die Kettenteile 15 stützen sich mit ihren Rollen 29 nun wieder auf der Lauffläche 35 der Führungsbahn 14 ab, so daß insgesamt der Kontakt der Staurolle 31 aufgeboben und letzte nicht mehr angetrieben wird. Die Werkstücke werden im Bereich der Laufschiene 36 dann wieder mit der Geschwindigkeit der Transportkette 13 weiterbewegt.

Alternativ ist es denkbar, die Staurollen 31 so zu bemessen und in den Basisteilten 17 anzuordnen, daß sie nur mit einem oberen Abschnitt gegenüber der Oberseite 18 des jeweiligen Basisteils 17 vorstehen. Bei dieser Ausführungsform der Vorrichtung kann die Transportkette 13 unter den stillstehenden oder verzögerten Werkstücken bzw. Transportpaletten 11 zwar noch entlangrollen; ein Antrieb der Staurollen 31 ist dann aber nicht mehr möglich. Diese Ausbildung der Staurollen 31 eignet sich besonders für Vorrichtungen, bei denen ein von der Geschwindigkeit der Transportkette 13 abweichender Antrieb der Werkstücke bzw. Transportpaletten 11 nicht erforderlich ist. Die mittige Nut 34 in der Lauffläche 35 der Führungsbahn 14 kann dann entfallen.

Weiterhin ist es alternativ möglich, die Kettenteile 15 nur mit Staurollen 31, nicht aber mit Rollen 29 zu versehen. Die Transportkette 13 gleitet dann entweder auf der Lauffläche 35 der Führungsbahn 14 entlang oder sie wälzt sich mit den Staurollen 31 auf der Lauffläche 35 ab. Im letztgenannten Falle findet - sofern der Kontakt der Staurollen 31 zur Führungsbahn 14 nicht aufgehoben wird - stets ein Transport der Werkstücke bzw. Transportpaletten 11 mit doppelter Geschwindigkeit der Transportkette 13 statt.

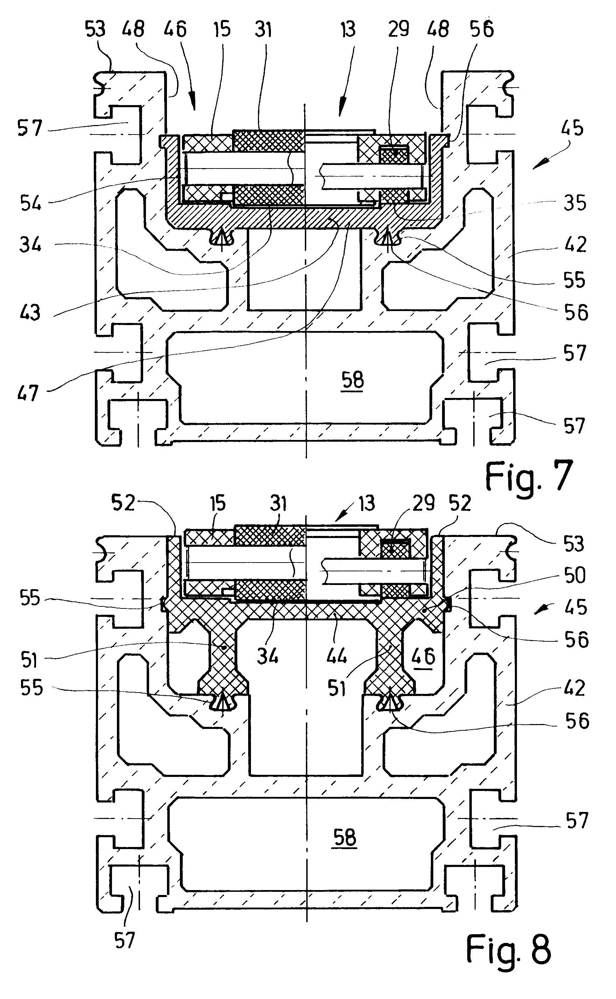

Die Förderbahn 14 der in den Fig. 1 bis 6 gezeigten Ausführungsform der Vorrichtung ist einstückig ausgebildet. Demgegenüber ist nach einer weiteren Erfindung die Führungsbahn 45 mehrteilig ausgebildet (Fig. 7 und 8). Sie setzt sich zusammen aus einem vorzugsweise aus Aluminium stranggepreßten Tragprofil 42 und einer Führungsschiene 43 bzw. 44 aus Kunststoff oder dergleichen. Die Führungsschienen 43 und 44 sind in einer oberen offenen Nut 46 im Tragprofil 42 angeordnet.

Erfindungsgemäß sind die Führungsschienen 43 und 44 unterschiedlich ausgebildet. Sie verfügen insbesondere über unterschiedliche Höhen, wodurch sie die Nut 46 im Tragprofil 42 alternativ teilweise (Fig. 7) oder vollständig (Fig. 8) ausfüllen. Die Führungsschienen 43 und 44 verfügen über eine jeweils gleichermaßen ausgebildete U-förmige Aufnahme 47 für die Transportkette 13. Dazu ist die Aufnahme 47 jeder Führungsschiene 43 und 44 etwa korrespondierend zum Querschnitt der Transportkette 13 ausgebildet. Infolge der unterschiedlichen Höhen der Führungsschienen 43 und 44 ist die Transportkette 13 auf unterschiedlichen Niveaus in der Führungsbahn 45 gelagert.

Die Führungsschiene 43 (Fig. 7) besteht lediglich aus der U-förmigen Aufnahme 47. Im Boden der Aufnahme 47 der Führungsschiene 43 befinden sich die Lauffläche 35 für die Rollen 29 und die Nut 34 zur Bildung der Freimachung für die Staurollen 31, die alternativ zum Ausführungsbeispiel der Fig. 4 ausgebildet sind. Die Führungsschiene 43 kleidet etwa eine untere Hälfte der Nut 46 im Tragprofil 42 aus. Oberhalb der Führungsschiene 43 bleiben daher parallel verlaufende (aufrechte) Wandabschnitte 48 zur seitlichen Begrenzung der Nut 46 bestehen. Diese dienen zur Aufnahme eines vorzugsweise zylindrischen Ansatzes 49 unterhalb der in der Fig. 5 gezeigten Transportpalette 11, die gegebenenfalls mit nicht gezeigten Wälzkörpern versehen sein kann zur Verringerung der Reibung zwischen dem Ansatz 49 und den feststehenden Wandabschnitten 48 der Nut 46.

Die Führungsschiene 44 (Fig. 8) weist unterhalb der U-förmig ausgebildeten Aufnahme 50, die im wesentlichen der Aufnahme 47 der Führungsschiene 43 entspricht, Abstandshalter auf. Diese sind hier als zwei parallel verlaufende, aufrechte Stege 51 ausgebildet. Die Höhe der Stege 51 ist derart bemessen, daß die oberen Ränder 52 der Aufnahme 50 bündig mit einer Oberseite 53 des Tragprofils 42 abschließen. Durch diese Ausbildung der Führungsschiene 44 befindet sich ein oberer Teilbereich der in einer Aufnahme 54 der Führungsschiene 44 geführten Transportkette 13 oberhalb einer durch die Oberseite 53 des Tragprofils 42 gebildeten Ebene (Fig. 8). Auf diese Weise lassen sich mit dieser Vorrichtung Werkstücke transportieren, die breiter als die Transportkette 13 oder die Führungsbahn 45 sind.

Die Führungsschienen 43 und 44 sind lösbar im Tragprofil 42 angeordnet. Zu diesem Zweck verfügen die Führungsschienen 43 und 44 über Vorsprünge 55, die in entsprechende Vertiefungen 56 der Nut 46 des Tragprofils 42 formschlüssig eingreifen. Dieser Eingriff kann dadurch herbeigeführt werden, daß die Führungsschiene 43 oder 44 in die Nut 46 des Tragprofils 42 eingeschoben oder eingerastet wird.

Das hier gezeigte Tragprofil verfügt an den Seitenwänden und an der Unterseite über Nuten, und zwar jeweils zwei T-Nuten 57. Diese dienen zur Befestigung des Tragprofils 42 an Stützorganen oder dergleichen oder zur Anbringung von irgendwelchen Gegenständen am Tragprofil, zum Beispiel an Magneten 40 (Fig. 6).

Des weiteren sind im Tragprofil 42 Hohlräume angeordnet, wovon ein unterer Hohlraum 58 zur Rückführung des leeren Untertrums der Transportkette 13 dient, das aus Vereinfachungsgründen nur in der nachfolgend näher beschriebenen Fig. 9 dargestellt ist.

Eine weitere Ausführungsform der Vorrichtung ist in der Fig. 9 dargestellt. Diese Vorrichtung verfügt über zwei parallele Führungsbahnen. Eine erste (in der Fig. 9 rechte) Führungsbahn 59 ist analog zur in der Fig. 7 gezeigten Führungsbahn 45 ausgebildet, setzt sich nämlich aus dem Tragprofil 42 und der Führungsschiene 43 zusammen. Es ist aber auch denkbar, die Führungsbahn 59 analog zur Ausführungsform der Fig. 5 (ohne Führungsschiene 43) auszubilden. In der Führungsbahn 59 läuft eine Transportkette, die der Transportkette 13 (Fig. 1 bis 4) entspricht. Ein leeres Untertrum 60 der Transportkette 13 wird im (unteren) Hohlraum 58 des Tragprofils 42 zurückgeführt.

Die zweite (in der Fig. 9 links dargestellte) Führungsbahn 61 besteht aus einem besonderen schmalen Tragprofil 62, in dem keine Transportkette läuft. Eine Oberseite 63 des Tragprofils 62 ist mit einer ebenen Läuffläche 64 versehen. Das Tragprofil 62 verfügt über seitlich offene Freiräume 65, die zur Aufnahme von Versorgungsleitungen 66 oder dergleichen dienen und durch Abdeckleisten 67 verschließbar sind. Die Abdeckleisten 67 lassen sich lösbar mit der offenen Seite des jeweiligen Freiraums 65 verbinden.

Die hier gezeigte Vorrichtung verfügt über eine besonders ausgebildete Transportpalette 12. Diese ist mit einem relativ breiten Träger 68 versehen, der sich über beide Führungsbahnen 59 und 61 erstreckt. Die der Führungsbahn 59 zugewandte Seite des Trägers 68 ist mit zwei unteren Ansätzen 69 versehen, die von oben in die Nut 46 des Tragprofils 42 hineinragen und sich auf der Transportkette 13, nämlich den Staurollen 31 derselben, abstützen. Auf diese Weise erfolgt ein einseitiger Antrieb der Transportpalette 12. Alternativ reicht auch ein einziger Ansatz 69 zur zuverlässigen Führung der Transportpalette 12 in der Führungsbahn 59 aus.

Der zylindrische Träger 68 ist um eine vertikale Achse 76 drehbar ausgebildet. Er verfügt über ein von unten an die Transportpalette angeschraubtes Basisstück 77 und eine darauf gelagerte Rolle 78. Das Basisstück 77 ist so an die Transportpalette 12 angeschraubt, daß es unter dieser um die vertikale Achse 76 frei drehbar ist. Ebenso ist die Rolle 78 auf dem Basisstück 77 um die vertikale Achse 76 frei drehbar. Der Durchmesser der Rolle 78 ist derart gewählt, daß ihr Mantel größer ist als das zylindrische Unterteil 79 des Basisstücks 77, aber noch Spiel zwischen den parallelen Wandabschnitten in der Nut 46 der Führungsbahn 59 hat (Fig. 9). Auf diese Weise kann der Ansatz 69 der Transportpalette 12 geführt durch die Rolle 78 in der Nut 46 entlanglaufen.

Der der zweiten Führungsbahn 61 zugeordnete Rand der Transportpalette 12 ist mit mindestens einer Laufrolle 70 versehen. Diese ist mittels einer quer zur Förderrichtung 20 verlaufenden Achse 71 in einer entsprechenden Ausnehmung 72 des Trägers 68 frei drehbar gelagert. Mit der Laufrolle 70 (bzw. den Laufrollen 70) stützt sich das der Antriebsseite gegenüberliegende Ende der Transportpalette 12 auf der Führungsbahn 61 ab, indem die Laufrolle 70 auf der Lauffläche 64 infolge des Antriebs der Transportpalette 12 durch die Transportkette 13 entlangläuft. Die Laufrolle 70 ist im gezeigten Ausführungsbeispiel um eine vertikale Achse 80 drehbar an der Transportpalette 12 gelagert. Die Laufrolle 70 hat dadurch die Funktion einer Laufrolle.

Der zwischen den Führungsbahnen 59 und 61 gebildete Freiraum macht die Transportpalette 12 von unten her zugänglich, wodurch das darauf angeordnete Werkstück, insbesondere zu Montagezwecken, auch von unten her erreichbar ist.

Alternativ kann die zweite Führungsbahn 61 mit einer Führungsschiene versehen sein, in der die Laufrollen 70 sich seitlich führen lassen. Auch ist es denkbar, die Transportpalette 12 an beiden Seiten anzutreiben. In diesem Falle sind beide Führungsbahnen gleichermaßen ausgebildet, nämlich wie die Führungsbahn 59 mit jeweils einer Transportkette 13. Auch kann die zweite Führungsbahn gemäß dem Ausführungsbeispiel der Fig. 8 ausgebildet sein mit einer oben aus dem Tragprofil 42 herausragenden Transportkette 13, auf der der (in der Fig. 9 linke) Rand der Transportpalette 12 frei aufliegt. Zweckmäßigerweise entfallen dann die Laufrollen 70.

## Patentansprüche

1. Vorrichtung zum Transport von Gegenständen mit einer entlang einer Führungsbahn angetriebenen und geführten Förderkette, die eine Mehrzahl miteinander verbundener Kettenteile aufweist, **dadurch gekennzeichnet,** daß die Kettenteile (15) mit Wälzkörpern versehen sind, auf denen die Kettenteile (15) auf der Führungsbahn (14, 45, 59) entlangrollen.

2. Vorrichtung nach Anspruch 1, dadurch gekennzeichnet, daß die Wälzkörper im Bereich einer Verbindung zweier benachbarter Kettenteile (15) angeordnet sind.

3. Vorrichtung nach Anspruch 1 oder 2, dadurch gekennzeichnet, daß jedes Kettenteil (15) mindestens einen Wälzkörper, vorzugsweise zwei frei drehbare Wälzkörper aufweist, die auf einer gemeinsamen vorzugsweise quer zur Förderrichtung (20) verlaufenden Achse (23) zur Verbindung zweier benachbarter Kettenteile (15) angeordnet sind.

4. Vorrichtung nach einem oder mehreren der Ansprüche 1 bis 3, dadurch gekennzeichnet, daß die Wälzkörper gegenüberliegenden Seiten einer etwa mittigen Gelenkverbindung (Gelenkpunkt 16) zwischen benachbarten Kettenteilen (15) zugeordnet sind.

5. Vorrichtung nach einem oder mehreren der Ansprüche 1 bis 4, dadurch gekennzeichnet, daß ein vorzugsweise unterer Teilbereich jedes Wälzkörpers gegenüber einer Seite, vorzugsweise einer Unterseite (19), eines Basisteils (17) jedes Kettenteils (15) vorsteht, derart, daß die Wälzkörper sich auf der Führungsbahn (14, 45, 59) ohne eine Anlage der Unterseite (19) des Basisteils (17) an der Führungsbahn (14, 45, 59) abwälzen.

6. Vorrichtung zum Transport von Gegenständen mit einer entlang einer Führungsbahn angetriebenen und geführten Förderkette, die eine Mehrzahl miteinander verbundener Kettenteile aufweist, insbesondere nach einem oder mehreren der Ansprüche 1 bis 5, dadurch gekennzeichnet, daß die Transportkette (13) mit Staurollen (31) zur Abstützung der zu transportierenden Gegenstände versehen ist, die mindestens entlang eines Teilbereichs der Führungsbahn (14, 45, 59) antreibbar sind.

7. Vorrichtung nach Anspruch 6, dadurch gekennzeichnet, daß die Staurollen (31) durch einen reibschlüssigen Kontakt mit der Führungsbahn (14, 45, 59) oder feststehenden Komponenten derselben antreibbar sind, insbesondere derart, daß sie sich beim Entlangbewegen durch die angetriebene Transportkette (13) an der stillstehenden Führungsbahn (14, 45, 59) an mindestens einer Lauffläche oder einer Laufschiene (36) derselben abwälzen.

8. Vorrichtung nach Anspruch 6 oder 7, dadurch gekennzeichnet, daß die Staurollen (31) um jeweils eine quer zur Förderrichtung (20) verlaufende Drehachse frei drehbar im Basisteil (17) des jeweiligen Kettenteils (15) gelagert sind.

9. Vorrichtung nach Anspruch 6, 7 oder 8, dadurch gekennzeichnet, daß die Staurollen (31) im Durchmesser derart bemessen sind, daß sie mindestens gegenüber einer Oberseite (18) des Basisteils (17), vorzugsweise auch gegenüber einer Unterseite (19) des Basisteils (17), mit einem Teilbereich vorstehen.

10. Vorrichtung nach einem oder mehreren der Ansprüche 6 bis 9, dadurch gekennzeichnet, daß die Führungsbahn (14, 45, 59) in denjenigen Bereichen der Förderstrecke, in denen ein Antrieb der Staurollen (31) erfolgen soll, mit einer erhöhten Lauffläche oder mit einer auf- oder abbewegbaren Laufschiene (36) versehen ist.

11. Vorrichtung zum Transport von Gegenständen mit einer entlang einer Führungsbahn angetriebenen und geführten Förderkette, die eine Mehrzahl miteinander verbundener Kettenteile aufweist, insbesondere nach einem oder mehreren der Ansprüche 1 bis 10, dadurch gekennzeichnet, daß die Führungsbahn (45, 59) aus einem Tragprofil (42) mit einer nutartigen Vertiefung (Nut 46) und einer in die nutartige Vertiefung eingesetzten Führungsschiene (43, 44) zur Aufnahme mindestens eines Teils der Transportkette (13) gebildet ist.

12. Vorrichtung nach Anspruch 11, dadurch gekennzeichnet, daß die Führungsschienen (43, 44) unterschiedliche Höhen aufweisen zur alternativen Anordnung einer höheren oder niedrigeren Führungsschiene (43, 44) in der Nut (46) des Tragprofils (42), wobei die Führungsschienen (43, 44) insbesondere lösbar mit dem Tragprofil (42) verbunden sind, vorzugsweise durch Rastverbindungen.

13. Vorrichtung nach Anspruch 11, dadurch gekennzeichnet, daß jede Führungsschiene (43, 44) eine Aufnahme (47, 50) aufweist, wobei die Aufnahmen (47, 50) über jeweils gegenüberliegenden Seiten derselben zugeordnete, aufrechte Wandabschnitte (48) verfügen, zwischen denen die Transportkette (13) geführt ist.

14. Vorrichtung nach einem oder mehreren der Ansprüche 11 bis 13, dadurch gekennzeichnet, daß eine niedrige Führungsschiene (43) derart bemessen ist, daß sie nur einen (unteren) Teil der Nut (46) des Tragprofils (42) ausfüllt, derart, daß ein (oberer) unausgefüllter Teil der Nut (46), insbesondere parallele, aufrechte Seitenwände derselben, eine Führung für auf der Transportkette (13) zu transportierende Gegenstände bildet.

15. Vorrichtung nach einem oder mehreren der Ansprüche 11 bis 14, dadurch gekennzeichnet, daß die höhere Führungsschiene (44) Abstandshalter, insbesondere Stege (51), an der Unterseite der Aufnahmemulde aufweist, die derart bemessen sind, daß obere Ränder (52) der Aufnahmemulde etwa bündig mit der Oberseite (53) des Tragprofils (42) abschließen.

16. Vorrichtung zum Transport von auf Transportpaletten angeordneten Gegenständen mit einer entlang einer Förderstrecke angetriebenen und geführten Förderkette, die eine Mehrzahl miteinander verbundener Kettenteile aufweist zur reibschlüssigen Mitnahme der die Gegenstände tragenden Transportpaletten, insbesondere nach einem oder mehreren der Ansprüche 1 bis 15, dadurch gekennzeichnet, daß die Förderstrecke aus zwei parallel mit Abstand zueinander verlaufenden Führungsbahnen (59, 61) gebildet ist, wobei die Führungsbahnen (59, 61) gegenüberliegenden Randbereichen der Transportpalette (12) zugeordnet sind.

17. Vorrichtung nach Anspruch 16, dadurch gekennzeichnet, daß die Transportpaletten (12) von einer Führungsbahn (59) vorzugsweise durch reibschlüssige Abstützung auf einer Transportkette (13) antreibbar sind, während die zweite Führungsbahn (61) lediglich zur Abstützung der Transportpalette (12) dient.

18. Vorrichtung nach Anspruch 16 oder 17, dadurch gekennzeichnet, daß ein sich auf der zweiten Führungsbahn (61) abstützender Randbereich der Transportpalette (12) mit Wälzkörpern versehen ist, insbesondere frei drehbaren Laufrollen (70), die sich auf einer Oberseite (63), insbesondere einer darauf angeordneten Lauffläche (64), der zweiten Führungsbahn (61) abwälzen.

19. Vorrichtung nach einem oder mehreren der Ansprüche 16 bis 18, dadurch gekennzeichnet, daß die Transportpalette (12) an einem Randbereich mit einem unterseitigen, vorzugsweise drehbaren, Ansatz (69) versehen ist, der derart ausgebildet ist, daß er von oben in eine Vertiefung des Tragprofils (42) der ersten Führungsbahn (59) eingreift und sich auf der Transportkette (13) der Führungsbahn (59) abstützt.
